# EUROPÄISCHE PATENTSCHRIFT

(11) **EP 1 084 045 B1**
(45) Veröffentlichungstag und Bekanntmachung des Hinweises auf die Patenterteilung: **19.10.2005**
(21) Anmeldenummer: 00931050.9
(22) Anmeldetag: 28.03.2000
(51) Int. Cl.: B60B 27/02, B62L 1/00

(54) **NABE FÜR FAHRRÄDER**
WHEEL HUB FOR BICYCLES
MOYEU DESTINE A DES BICYCLETTES

(30) Priorität: 08.04.1999 DE 19915714
(43) Veröffentlichungstag der Anmeldung: 21.03.2001
(73) Patentinhaber: SRAM Deutschland GmbH, 97404 Schweinfurt (DE)
(72) Erfinder: STÜRMER, Joachim, D-97422 Schweinfurt (DE); FEILER, Peter, D-97493 Bergrheinfeld (DE); ARBEITER, Markus, D-50674 Köln (DE); KRÖGER, Peter, D-97422 Schweinfurt (DE); PLEE, Jean, Bernard, F-80132 Cambron (FR)
(74) Vertreter: Jordan, Volker Otto Wilhelm
(86) Internationale Anmeldenummer: PCT/EP2000/002704
(87) Internationale Veröffentlichungsnummer: WO 2000/061388

(56) Entgegenhaltungen:
- EP-A- 0 955 233
- WO-A-00/11366
- DE-A- 19 532 057
- FR-A- 2 684 063
- FR-A- 2 752 773
- US-A- 5 626 401

## Beschreibung

Die Erfindung bezieht sich auf eine Nabe für ein Laufrad eines Fahrrades zur Befestigung einer Bremsscheibe gemäß dem Oberbegriff des Anspruchs 1.

Aus der WO 00/11366 ist eine Nabe bekannt, die als integralen Bestandteil einen Befestigungsflansch mit einem kreisförmigen Feld von Befestigungslöchern zur Befestigung einer Bremsscheibe aufweist. Dies bedingt die Bereitstellung eines entsprechenden radialen Bauraums, selbst wenn im Einzelfall auf die Montage einer Bremsscheibe verzichtet werden soll.

Verschiedene Arten der Befestigung von Bremsscheiben an Radnaben sind ferner aus der FR 2 752 773 A, FR 2 684 063 A, US 5,626,401 und DE 195 32 052 A1 bekannt. Gemäß DE 195 32 502 A1 wird eine Fahrradbremsscheibe gemeinsam mit einem Radlager an Schrauböffnungen in einem Befestigungsflansch einer Radnabe festgeschraubt, wobei das Radlager innerhalb eines Ringabschnitts des Befestigungsflansches drehfest zur Anordnung kommt, der zur Befestigung der Radspeichen dient.

Die Stand der Technik nach Art. 54 (3) EPÜ darstellende EP O 955 233 A2 offenbart eine Nabe für ein Laufrad eines Fahrrades, bei der ein als Adapter bezeichenbarer Scheibenhaltestern mittels einer Innenverzahnung drehfest auf einer Außenverzahnung der Nabenhülse anbringbar ist, wobei der Scheibenhaltestern und damit die Bremsscheibe ein gewisses Axialspiel auf der Nabenhülse hat, um eine gewisse axiale Selbsteinstellung der Bremsscheibe beim Bremsen vorzusehen.

Durch einen Dritten wurde nach Art. 115 EPÜ eine Broschüre der Firma Formula Engineering mit dem Titel "1998 FORMULA" als Stand der Technik nach Art. 54 (2) EPÜ darstellendes und eine Nabe nach dem Oberbegriff von Anspruch 1 zeigendes Dokument vorgelegt.

Der Erfindung liegt die Aufgabe zu Grunde, eine universelle Nabenhülse zu schaffen, die entweder mit oder ohne Bremsscheibe ausgerüstet sein kann, wobei verschieden geartete Bremsscheiben, ggf. auch Bremstrommeln, zum Einsatz kommen können und mit der Nabe zur gemeinsamen Drehung verbunden werden können.

Zur Lösung dieser Aufgabe wird die Nabe mit den Merkmalen des Anspruchs 1 vorgeschlagen.

Erfindungsgemäß wird eine Nabe mit einer Nabenhülse geschaffen, die mit einer Bremsscheibe ausgerüstet werden kann, überdies aber auch dafür vorgesehen ist, auch ohne Bremsscheibe eingesetzt zu werden oder aber mit anderen Bremsentypen ausgerüstet zu sein.

Der erfindungsgemäße Adapter weist hierzu ein Innenprofil auf, das mit einem Außenprofil der Nabe zusammenpasst, um die drehfeste und vermittels des Befestigungsteils axial feste Verbindung zwischen dem Adapter und der Nabenhülse vorzusehen, insbesondere durch Aufstecken des Adapters auf die Nabenhülse und anschließendes Aufschrauben des Befestigungsteils auf die Nabenhülse. Soll die Nabe mit einer Bremsscheibe ausgestattet werden, so lässt sich diese über die Befestigungslöcher, insbesondere Befestigungsbohrungen, mit dem Adapter verbinden. Der Adapter selbst wird mittels eines zugeordneten Befestigungsteils axial an der Nabe bzw. der Nabenhülse fixiert.

Der Adapter kann vorteilhaft eine bezogen auf die Umfangsrichtung spiellose Montage der Bremsscheibe an der Nabenhülse ermöglichen, so dass im Falle einer Bremsung immer eine spiellose Mitnahme der Nabenhülse über den Adapter erfolgt. Hierzu wird vorgeschlagen, dass der Adapter durch mindestens eine Schraube in einer Bremsdrehrichtung an der Nabenhülse fixiert wird. Die Vermeidung von Spiel in Umfangsrichtung ist insbesondere insoweit von Vorteil, als dass vermieden wird, dass dem Fahrer, insbesondere bei Langsamfahrt, die gefühlsmäßige Rückmeldung eine zur Betätigung der Bremse unverhältnismäßig weiche Anfangsverzögerung suggeriert, was sich negativ auf das Fahren oder das Fahrgefühl auswirken könnte.

Das zur axialen Fixierung des Adapters an der Nabenhülse dienende Befestigungsteil kann vorteilhaft einen Bund aufweisen, der nach radial innen weist und eine Lagerstelle der Nabe abdeckt, um sie somit vor eindringendem Schmutz schützt.

Soll auf eine Scheibenbremse oder Bremstrommel verzichtet werden, so kann die Nabenhülse unverändert verwendet werden, wobei an die Stelle des Adapters und des Befestigungsteils eine einfache Abdeckung treten kann, die insbesondere die Anforderungen an die Dichtigkeit der Lagerstelle erfüllt.

Anhand von mehreren Zeichnungen wird ein Ausführungsbeispiel einer Nabe mit der Anbaumöglichkeit einer Bremsscheibe erläutert. Es zeigen:
- Fig. 1: eine Nabe mit einem Adapter zur Befestigung einer Bremsscheibe;
- Fig. 2: die Verbindung des Adapters mit einer Nabenhülse der Nabe mittels eines Befestigungsteils im Teilschnitt;
- Fig. 3: die Nabenhülse mit einem Profil zur Befestigung des Adapters;
- Fig. 4: die Nabenhülse mit dem Profil und mit einem Befestigungsgewinde für das Befestigungsteil;
- Fig. 5: eine Teilansicht der Nabenhülse mit dem Profil;
- Fig. 6: den Adapter mit einem Innenprofil, bestehend aus zwei Flanken in perspektivischer Darstellung;
- Fig. 7: den Adapter mit einer Schraubenbohrung zur Erzeugung von tangentialer Spielfreiheit gegenüber der Nabenhülse.

Wird mit 1 eine Nabe für ein Fahrrad zur Befestigung einer Bremsscheibe bezeichnet, so weist diese eine Nabenhülse 2 auf, die über Lager 5 mit einer feststehenden Nabenachse 4 verbunden ist. Die Nabenhülse weist Speichenflansche 3 auf, die üblicherweise über Speichen mit einer Felge in Verbindung stehen und ein Laufrad für das Fahrrad bilden.

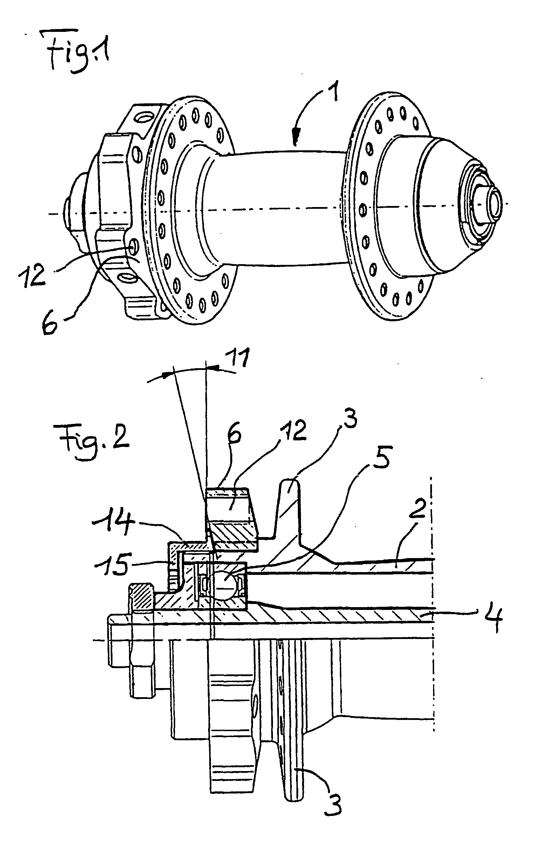

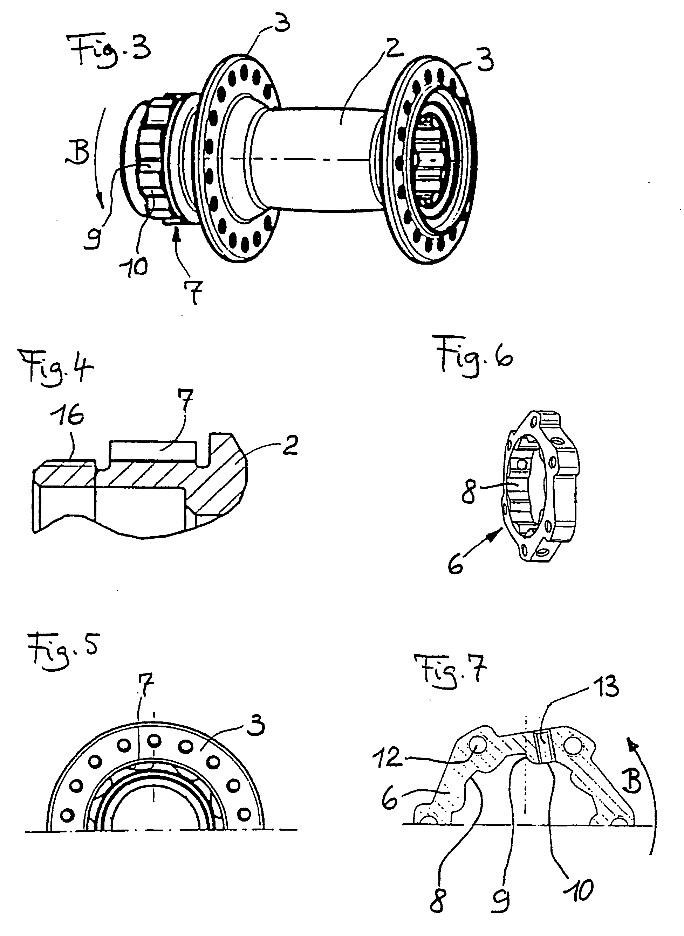

Gemäß den Fig. 1, 2, 3 und 4 weist die Nabenhülse 2 ein Profil 7 auf, welches eine erste Flanke 9 und eine zweite Flanke 10 aufweist. Das Profil ist zahnförmig am Umfang angeordnet und spanlos herstellbar, wobei im Falle eines Spritzgießverfahrens eine Werzeughälfte in axialer Richtung ziehbar sein muß. Mit diesem Profil 7 läßt sich ein Adapter 6 verbinden, der ein Innenprofil 8 aufweist, und ebenso wie das Profil 7 eine erste Flanke 9 und eine zweite Flanke 10 aufweist. Da das Profil 7 zum Innenprofil 8 des Adapters 6 eine Fügeverbindung eingeht, läßt sich der Adapter 6 mit der Nabenhülse 2 in beide Drehrichtungen durch Aufschieben fest montieren, wobei ein geringes tangentiales Spiel entstehen kann, welches bei der Einleitung von Drehmoment über den Adapter 6 auf die Nabenhülse 2 im Fahrbetrieb unangenehme Stöße entstehen lassen kann. Aus diesem Grunde ist gemäß den Fig. 6 und 7 mindestens eine Schraubenbohrung 13 angeordnet, die radial durch den Adapter verläuft und gegen die zweite Flanke 10 gerichtet ist. Wie aus der Fig. 7 hervorgeht, ist die erste Flanke 9 in einer Bremsdrehrichtung B angeordnet und steiler als die zweite Flanke 10, welche in der Bremsdrehrichtung B keine Kräfte übertragen muß. Beim Einschrauben einer Schraube in die Schraubenbohrung 13 wird vom Adapter 6 Druck auf die zweite Flanke 10 ausgeübt, wodurch sich der Adapter 6 in der Bremsdrehrichtung B solange verdreht, bis das Spiel aufgezehrt ist, und die erste Flanke 9 des Innenprofils 8 gegen die erste Flanke 9 des Profils 7 auf der Nabenhülse 2 gepreßt wird. In diesem Fall kann eine Bremsscheibe, welche über Befestigungsbohrungen 12 am Adapter 6 befestigt ist, das Bremsmoment direkt auf die Nabenhülse 2 übertragen, ohne ein schädliches Spiel zu durchlaufen.

Ein Befestigungsteil 14 wird auf ein Befestigungsgewinde 16 gegen den Adapter 6 gedreht, wodurch dieser axial festgelegt wird. An der Berührungsstelle zwischen dem Befestigungsteil 14 und dem Adapter 6 ist eine schüsselartige Berührungsfläche angeordnet, die einen Winkel 17 aufweist, wodurch beim Andrehen des Befestigungsteils 14 eine zusätzliche Zentrierung des Adapters 6 auf der Nabenhülse 2 stattfindet. Das Befestigungsteil 14 bildet mit dem Adapter 6 einen rechten Winkel, wodurch die Bremsscheibe beim Befestigen am Adapter 6 zentriert werden kann. Das Befestigungsteil 14 weist einen nach radial innen weisenden Bund 15 auf, der sich um die Nabenhülse 2 herum und über das Lager 5 erstreckt, wodurch sich eine zusätzliche Abdichtstelle gegen eindringenden Schmutz bildet.

## Patentansprüche

1. Nabe (1) für ein Laufrad eines Fahrrades, umfassend eine Nabenachse (4), eine Nabenhülse (2) mit Speichenflanschen (3), mindestens ein Lager (5) zwischen der Nabenachse (4) und der Nabenhülse (2), und mit einem Adapter (6) mit Befestigungslöchern (12) zur Befestigung des drehenden Teils einer Bremsanlage, insbesondere einer Bremsscheibe, wobei der Adapter mit einem Innenprofil (8) ausgeführt ist, welches mit der Nabenhülse (2) an einem dort umlaufend angeordneten und mit dem Innenprofil (8) zusammenpassenden Profil (7) drehfest verbunden und vermittels eines zugeordneten Befestigungsteils (14) axial fixiert ist,
wobei das einen Gewindering aufweisende Befestigungsteil (14) mit einem Befestigungsgewinde (16) der Nabenhülse gegen den Adapter (6) verschraubt ist,
**dadurch gekennzeichnet,**
**dass** das Befestigungsteil (14) einen nach radial innen weisenden, sich um die Nabenhülse (2) herum ersteckenden Bund (15) aufweist, wodurch sich eine Abdichtstelle gegen eindringenden Schmutz bildet.

2. Nabe nach Anspruch 1, **dadurch gekennzeichnet, dass** das Profil (7) sowie das Innenprofil (8) eine Zahnform mit einer ersten Flanke (9) und mit einer zweiten Flanke (10) aufweisen.

3. Nabe nach Anspruch 1 oder 2, **dadurch gekennzeichnet, dass** die erste Flanke (9) in einer Bremsdrehrichtung (B) ein Bremsmoment von der Bremsscheibe auf die Nabenhülse (2) übertragen kann.

4. Nabe nach einem der Ansprüche 1 bis 3, **dadurch gekennzeichnet, dass** der Adapter (6) eine Schraubenbohrung (13) für eine Schraube aufweist, wobei die Schraube gegen die zweite Flanke (10) des Profils gerichtet ist und dort eine tangentiale Vorspannung zwischen der Nabenhülse (2) und dem Adapter (6) erzeugen kann, wobei diese Vorspannung die ersten Flanken (9) des Profils (7) und des Innenprofils (8) gegeneinander verspannt.

5. Nabe nach Anspruch 2 und nach Anspruch 4, **dadurch gekennzeichnet, dass** die Schraubenbohrung (13) in etwa senkrecht auf die zweite Flanke (10) gerichtet ist.

6. Nabe nach einem der Ansprüche 1 bis 5, **dadurch gekennzeichnet, dass** das Befestigungsteil (14) an seiner mit dem Adapter (6) in Kontakt kommenden ringförmig verlaufenden Stirnfläche einen flachen, schüsselförmig verlaufenden Winkel (17) aufweist.

7. Nabe nach einem der Ansprüche 1 bis 6, **dadurch gekennzeichnet, dass** der Bund (15) des Befestigungsteils (14) eine Abdichtstelle für das Lager (5) bildet.

8. Nabe nach einem der Ansprüche 1 bis 7, **dadurch gekennzeichnet, dass** der Adapter (6) sechs in einem Ring des Adapters (6) winkelmäßig verteilte Befestigungslöcher (12) aufweist.

## Claims

1. Hub (1) for a wheel of a bicycle, comprising a hub axle (4), a hub sleeve (2) having spoke flanges (3), and at least one bearing (5) between the hub axle (4) and the hub sleeve (2), and having an adapter (6) having fixing holes (12) for fixing the rotating part of a brake system, in particular of a brake disc, the adapter being designed with an internal profile (8) which is connected in a rotationally fixed manner to the hub sleeve (2) on a profile (7) which is arranged around its periphery and is matched to the internal profile (8), and which is axially fixed by means of an associated fixing part (14), the fixing part (14), which has a threaded ring, being screwed with a fixing thread (16) on the hub sleeve in the direction of the adapter (6),
**characterized in that**
the fixing part (14) has a radially inwardly facing collar (15) extending around the hub sleeve (2), as a result of which a sealing location against dirt penetrating is formed.

2. Hub according to Claim 1,
**characterized in that**
the profile (7) and the internal profile (8) have a toothed form with a first flank (9) and with a second flank (10).

3. Hub according to Claim 1 or 2,
**characterized in that**
in a braking direction of rotation (B) the first flank (9) can transmit a braking torque from the brake disc to the hub sleeve (2).

4. Hub according to one of Claims 1 to 3,
**characterized in that**
the adapter (6) has a screw hole (13) for a screw, the screw being directed against the second flank (10) of the profile and being able to produce at this point a tangential prestress between the hub sleeve (2) and the adapter (6), said prestress bracing the first flank (9) of the profile (7) and of the internal profile (8) against each other.

5. Hub according to Claim 2 and Claim 4,
**characterized in that**
the screw hole (13) is directed approximately perpendicularly onto the second flank (10).

6. Hub according to one of Claims 1 to 5,
**characterized in that**
the fixing part (14) has, on its end surface which runs annularly and comes into contact with the adapter (6), a flat angle (17) with a dish-shaped profile.

7. Hub according to one of Claims 1 to 6,
**characterized in that**
the collar (15) of the fixing part (14) forms a sealing location for the bearing (5).

8. Hub according to one of Claims 1 to 7,
**characterized in that** the adapter (6) has six fixing holes (12) angularly distributed in a ring of the adapter (6).

## Revendications

1. Moyeu (1) pour une roue porteuse d'une bicyclette, comprenant un axe de moyeu (4), une douille de moyeu (2) avec des flasques de rayonnage (3), au moins un palier (5) entre l'axe de moyeu (4) et la douille de moyeu (2), et avec un adaptateur (6) avec des trous de fixation (12) pour la fixation de la partie rotative d'un dispositif de freinage, en particulier d'un disque de freinage, l'adaptateur (6) étant muni d'un profil intérieur (8) qui est raccordé de manière solidaire en rotation avec la douille de moyeu (2) sur un profil (7) agencé à cet endroit sur la périphérie et s'adaptant au profil intérieur (8), et qui est fixé axialement à l'aide d'une pièce de fixation (14) associée,
la pièce de fixation (14) comportant une bague filetée et étant vissée sur un filetage de fixation (16), formé sur la douille de moyeu, contre l'adapteur (6),
**caractérisé en ce que** la pièce de fixation (14) comporte un collet (15) dirigé vers l'intérieur, s'étendant tout autour de la douille de moyeu (2), par lequel est formée une zone d'étanchement s'opposant à l'entrée de boue.

2. Moyeu selon la revendication 1, **caractérisé en ce que** le profil (7) ainsi que le profil intérieur (8) présentent une forme de dents avec un premier flanc (9) et avec un second flanc (10).

3. Moyeu selon la revendication 1 ou 2, **caractérisé en ce que** le premier flanc (9) peut transmettre un couple de freinage du disque de freinage à la douille de moyeu (2), dans un sens de rotation de freinage (B).

4. Moyeu selon l'une des revendications 1 à 3, **caractérisé en ce que** l'adaptateur (6) comporte un trou taraudé (13) pour une vis, la vis étant dirigée contre le second flanc (10) du profil et pouvant générer une précontrainte tangentielle entre la douille de moyeu (2) et l'adaptateur (6), cette précontrainte calant les premiers flancs (9) du profil (7) et du profil intérieur (8) les uns contre les autres.

5. Moyeu selon la revendication 2 et la revendication 4, **caractérisé en ce que** le trou taraudé (13) est orienté à peu près perpendiculairement par rapport au second flanc (10).

6. Moyeu selon l'une des revendications 1 à 5, **caractérisé en ce que** la pièce de fixation (14) présente un angle (17) aplati s'étendant en forme de cuvette sur sa surface extérieure s'étendant en forme d'anneau, venant au contact avec l'adaptateur (6).

7. Moyeu selon l'une des revendications 1 à 6, **caractérisé en ce que** le collet (15) de la pièce de fixation (14) forme une zone d'étanchement pour le palier (5).

8. Moyeu selon l'une des revendications 1 à 7, **caractérisé en ce que** l'adaptateur (6) présente six trous de fixation (12) répartis angulairement dans une bague de l'adaptateur (6).
